# EUROPEAN PATENT SPECIFICATION

(11) **EP 2 725 256 B1**
(45) Date of publication and mention of the grant of the patent: **01.02.2017**
(21) Application number: 13173041.8
(22) Date of filing: 20.06.2013
(51) Int. Cl.: F16D 65/00, F16D 65/08

(54) **Apparatus for reducing dust emissions**
Vorrichtung zur Reduzierung der Staubemissionen
Appareil permettant de réduire l'émission de poussière

(30) Priority: 26.10.2012 PL 40137312
(43) Date of publication of application: 30.04.2014
(73) Proprietor: Przemyslowy Instytut Motoryzacji, 03-301 Warszawa (PL)
(72) Inventor: Jakubowski, Andrzej, 03-147 Warszawa (PL); Pijanowski, Boguslaw, 03-982 Warszawa (PL); Kieracinska, Anna, 90-244 ód (PL)
(74) Representative: Sielewiesiuk, Jakub

(56) References cited:
- DE-A1- 4 401 846
- DE-A1- 19 643 869
- JP-U- H0 338 432
- SU-A1- 407 764

## Description

An object of the invention is the apparatus for reducing dust emissions generated during braking of a vehicle equipped with a drum brake and a brake system comprising such an apparatus. In particular, such an apparatus includes the brake shoe having a friction material layer mounted on a shoe base, intended for mounting to the fixed disc of the said drum brake from the inner side of this brake's drum and at least one suction nozzle intended for connecting via the compressed air hose to a vacuum source.

The average car emits into the environment large amounts of brake dust generated as a result of friction pair operation: in the particular case of the brake shoe (friction lining) and the brake drum during braking.

From the point of view of the environment protection it is a problem because of this reason, busy intersections, roads and streets of big cities are places where the formation of tons of dust per year takes place, and many users living there are exposed to the harmful effects of such dust.

Various methods and apparatuses reducing the emission of dust into the environment from automotive vehicles braking systems are knows in the state of the art in the automotive field, including friction braking systems, i.e., those using the disc or drum brake friction linings to slow down and stop a road vehicle.

The publication DE 4401846 A1 discloses the structure of the friction lining including milled recesses within the friction lining, for example in the form of a ring, connected to a source of compressed air through at least one compressed air hose. Suction nozzles are independent components, located outside the brake calliper. This solution only applies to disc brakes.

The publication DE 4240873 A1 discloses the apparatus for collecting brake dust in the motor vehicles equipped with disc brakes, having a suction filter, centrally mounted with flexible connections, with a suction nozzle associated with individual brake pads. Suction nozzle (6, 7) is installed in the proximity of brake pads (3, 4) and is connected through a rubber tube from the central filtration unit (14).

Additionally, patent application EP 1256739 A2 discloses a method of electrostatic precipitation of the vehicle braking system and the vehicle braking system which includes a removable collector collecting brake dust near the friction lining (24, 26) and an apparatus for generating an electric field, so that generated brake dust is drawn into the collector.

The publication DE 19643869 A1 discloses a braking system for a motor vehicle or machine which has a suction device (2, 5) for removing dust generated from the abrasion of the friction linings. This suction device has at least one funnel dust collector (5), which at one end has a suction opening adjacent to the brake disc (7) or to the brake drum. The other end is connected through the suction hose (4) to the collector (3), which has an electrically powered pump to produce a vacuum.

Polish patent application no. P-381 004 discloses a method of removing and collecting dust generated during braking, at the interface between the friction lining and brake disc, with the air stream generated by its compression or causing a vacuum in a closed space, in which the brake disc in located, and then directing the contaminated air into a special container with a filter.

Polish patent application no. P-386923 discloses an apparatus for reducing the emission of duct from the drum brake assembly, consisting of two brake shoes with friction linings (1, 2 ), in which two suction openings were made (3, 4), one in each brake shoe with friction linings (1, 2) so that while braking, the rotating brake drum (5) first is in contact with the friction linings of the brake shoes (1, 2) and then moves towards the direction of the suction openings (3, 4) connected by metal wires (6, 7) with a the tee (8) which is connected via plastic hose (9) with a filter (10) and the filter (10) is connected via plastic hose (11) to the manifold of the car engine (12).

The publication SU 407 764 A1 refers to the cooling system based on compressed air, where the place of delivery of compressed air to cool the drum is entirely coincidental. D1 silent on reducing dust emissions.

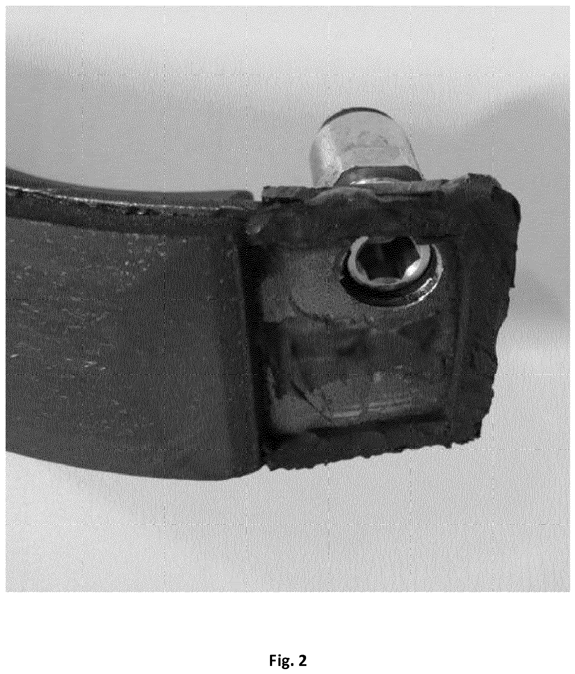

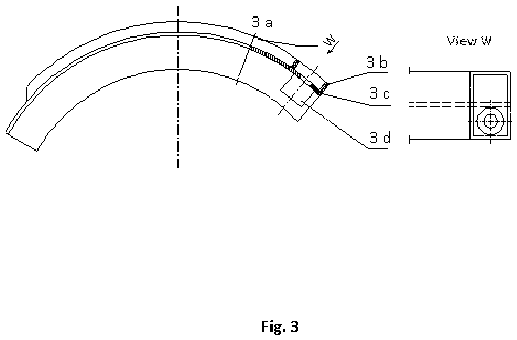

Likewise, the publication DE 44 01846 A1 relates to a cooling system based on compressed air, wherein the point of feeding compressed air to cool the brake disc is completely random, and the air supply channels are formed directly in the friction material of the brake pad. There are two examples of embodiment of the channel in the shoe (Fig. 2 and Fig. 3). According to the publication, the brake dust is exhausted to the outside of the brake, to the environment, so that it contaminates. Moreover, this solution has the disadvantage that weakens the friction material cohesiveness, which is unacceptable in view of the specific requirements for the shear strength and compressibility according to UNECE Regulation No 90. In its essence and intention of the patent has nothing to do with the present.

All of the above-mentioned solutions essentially consist in capturing generated dust, but their performance is not satisfactory or they require the use of additional technical measures, such as the source of an electrostatic field.

Unexpectedly, during the approval tests of the friction pads there appeared the idea of a solution, which aimed to reduce the emissions of dust into the environment of man.

Therefore, the object of the present invention is to provide an improved apparatus, effectively reducing dust emissions in vehicle drum brakes, especially road ones, marked by a high efficiency of dust capturing and not requiring the use of additional technical measures, such as the source of an electrostatic field. In particular, this invention provides reducing, to a large extend, pollution from the drum disc and has a very high efficiency of collecting almost all the amount of dust generated during braking of the vehicle. The dust collected in a suitable container can be recycled easily.

Thus, in accordance with the present invention an apparatus for reducing emissions of dust generated during braking of a vehicle equipped with a drum brake, in particular an automotive vehicle, comprising: the brake shoe, having a friction material layer mounted on the shoe base, intended for mounting to the fixed disc of the said drum brake from the inner side of this brake's drum and at least one suction nozzle intended for connecting via the compressed air hose to a vacuum source, is characterized in that the suction opening of the suction nozzle is located at the edge of the friction material layer of the brake shoe friction lining, which the rotating drum of the drum brake passes later in use, wherein the suction opening of the suction nozzle has an edge, made of flexible material resistant to high temperature, preferably a plastic, resistant to high temperature, most preferably high-temperature silicone.

Preferably, the suction opening of the suction nozzle connects through the opening in the shoe base with the quick-disconnect coupling designed for the connection of the suction nozzle with the compressed air hose.

Preferably, the shoe base is made of metal, preferably of steel.

Yet more preferably, this edge is of the same height as the friction material layer, so that the edge fits close to the working surface of the drum during braking.

The present invention further includes a vehicle braking system equipped with a drum brake, in particular an automotive vehicle, characterized in that it comprises an apparatus of the invention defined above.

The system of the invention further comprises compressed air hoses for connecting the suction nozzle, in particular through a quick-disconnect coupling with a vacuum source, preferably with the vehicle manifold.

Preferably, an additional air filter is located in a chain of compressed air hoses between the suction nozzle and the vacuum source.

Preferably, a part of the compressed air hose directly connected with the suction nozzle is made of metal.

Preferably, a part of the compressed air hose directly connected with the vacuum source is flexible, preferably made of plastic.

Preferably, the system of the invention includes two suction nozzles settled in two shoes of the vehicle drum brake, positioned on the opposite sides of the brake drum, preferably symmetrically with respect to the brake drum axis.

More preferably, parts of the compressed air hoses leading from the suction nozzles to the vacuum source, respectively, are connected, preferably by a tee, while one common compressed air hose leads from their connection to the vacuum source, which preferably contains an additional air filter.

The present invention has the following advantages, which include:
- collection of almost 100% of brake dust produced, since all the dust is drawn into the suction nozzle area which effectively protects the collected dust from air swirls during motion of the vehicle.
- the suction nozzle sticking closely to the drum during braking;
- and the fact that, on the free place of the sheet, on which there is no friction material a silicone can be added, which is building up the edge and thus seals the suction nozzles (an apparatus according to the invention may be constructed without the edges, but then it is less effective in collecting dust); if such a seal (edge) is applicable then high-temperature silicone is used for its formation, the one which is resistant to high temperature, does not alter its state into liquid and does not melt at high temperatures, which is not combustible, becomes flexible and sealed at high temperatures, preferably, for example, a silicone by Pacer Technology company LLC, no. 80 726 is used.

### Preferred embodiment of the invention

The invention will now be further described in the preferred embodiment, with reference to the accompanying drawings, in which:
- fig. 1: shows a general scheme and a view of A-A section of the drum brake according to the invention, wherein the following symbols were used: 1 and 2 - brake shoes with friction linings; 3 and 4 - suction nozzles, 5 - brake drum and its rotation direction (marked with an arrow); 6 and 7 - metal wires; 8 - tee; 9 - plastic hoses; 10 - filter; 11- hose; and 12 - engine manifold or other vacuum source; whereas
- fig. 2: shows an example embodiment of the invention including the suction nozzle made directly on the exposed portion of the shoe without the brake shoe friction lining;
- fig. 3: a diagram of the suction nozzle made in the drum brake shoe and a W view in the section, wherein the following symbols were used: 3a - shoe friction material; 3b - edge (silicone); 3c - shoe base; 3d - quick-disconnect coupling.

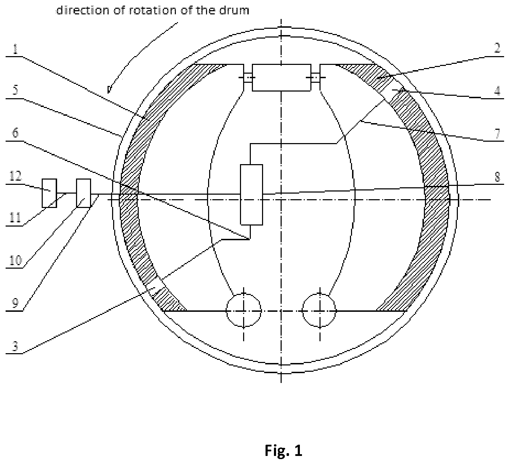

A preferred embodiment of the invention is shown in fig. 1-3.

The braking system of the invention comprises the brake drum 5, shoes with the friction lining 1 and 2, comprising the suction nozzles 3 and 4 made in the base (3c) of the shoe 1 and 2 in the direction of rotation of the drum, metal wires 6 and 7 with a tee 8, connected through hose made of plastic 9 with an additional air filter 10, which in turn is connected to a removable engine manifold 12.

The apparatus of the invention for reducing duct includes two suction nozzles 3 and 4 for collecting brake dust made directly in the shoes 1 and 2 of the drum brake. Friction fining of the shoe 1 and 2 includes a friction material layer 3a, while the suction opening of the suction nozzle 3 and 4 is located in the shoe base 3a, and in the presented embodiment it is placed outside the friction lining on the exposed portion of the shoe base 3a (looking in the direction of rotation of drum 5).

The suction nozzle 3 includes the suction opening made in the structural element of the shoe 3c outside the brake friction material 3a of the shoe 1 and 2 and located at the edge of this layer 3a and is connected through the opening in the shoe base 3c, made of metal, preferably of steel, with the compressed air hose 6, 7, 9 and 11, the compressed air hose including the metal wire 6 and 7, and a plastic hose 9 and 11, by means of the quick-disconnect coupling 3d, for collecting the suction nozzle 3 with the compressed air hose 6, 7, 9 and 11.

The quick-disconnect coupling 3d is connected with the additional air filter 10 by means of the metal wire 6 and 7 and through the tee 8. In turn, the air filter 10 is connected through the plastic hose 9 and 11 with a engine manifold 12 collecting brake dust.

The suction opening of the suction nozzle 3 and 4 is located near the edge of the friction material layer 3a of the friction lining of the brake shoe 1 and 2 which the rotating drum 5 of the drum brake passes later in use.

The suction opening is further provided with the edge 3b, made of high-temperature silicone by Pacer Technology company LLC, no. 80726. For this purpose, preferably plastic resistant to high temperature is used, and most preferably a high-temperature silicone. The edge 3b of the suction nozzle 3 fits closely to the working surface of the drum 5 during braking, and there is no gap between the drum and the suction nozzle. The height of the edge 3b of the suction nozzle 3 decreases with the height of the friction material 3a (due to abrasion). Thus, the effect of adhesion to the drum 5 is durable.

The apparatus of the invention can be widely used in vehicles, in particular automotive vehicles, which can contribute to the maintenance of appropriate standards of air dust in the light of the current EU legislation.

## Claims

1. An apparatus for reducing dust emissions generated during braking of a vehicle equipped with the drum brake, in particular automotive vehicle, comprising:
the brake shoe (1, 2) having the friction material layer (3a) mounted on the shoe base (3c), intended for mounting to the fixed disc of the drum brake from the inner side of this brake's drum (5) and
at least one suction nozzle (3, 4) intended for connecting via the compressed air hose (6, 7, 9, 11) to a vacuum source (12),
**characterised in that**
the suction opening of the suction nozzle (3) is located at the edge of the friction material layer (3a) of the brake shoe friction lining (1), which the rotating drum (5) of the drum brake wears in use, wherein the
suction opening of the suction nozzle (3) has an edge (3b), made of flexible material resistant to high temperature, preferably a plastic, resistant to high temperature, most preferably high-temperature silicone.

2. The apparatus of any of the preceding claims, **characterized in that** the suction opening of the suction nozzle (3) connects through the opening in the shoe base (3c) with the quick-disconnect coupling (3d) designed for the connection of the suction nozzle (3) with the compressed air hose (6, 7, 9, 11).

3. The apparatus of any of the preceding claims, **characterized in that** the shoe base (3c) is made of metal, preferably of steel.

4. The apparatus of claim 1, **characterized in that** the edge (3b) is of the same height as the friction material layer (3a), so that the edge (3b) fits closely to the working surface of the drum (5) during braking.

5. A vehicle braking system equipped with a drum brake, in particular an automotive vehicle, **characterized in that** it comprises an apparatus of any of the preceding claims.

6. The system of claim 5, **characterized in that** it further comprises compressed air hoses (6, 7, 9, 11) for connecting the suction nozzle (3), in particular through a quick-disconnect coupling (3d) with a vacuum source (12), preferably with the vehicle manifold.

7. The system of claim 5 or 6, **characterized in that** an additional air filter (10) is located in a chain of compressed air hoses (6, 7, 9, 11) between the suction nozzle (3) and the vacuum source (12).

8. The system of claim 5 or 6 or 7, **characterized in that** a part of the compressed air hose (6) directly connected with the suction nozzle (3) is made of metal.

9. The system of claim 5 or 6 or 7 or 8, **characterized in that** a part of the compressed air hose (11) directly connected with the vacuum source (12) is flexible, preferably made of plastic.

10. The system of any of the preceding claims from 5 to 9, **characterized in that** it includes two suction nozzles (3, 4) settled in two shoes (1, 2) of the vehicle drum brake, positioned on the opposite sides of the brake drum (5), preferably symmetrically with respect to the drum (5).

11. The system of claim 10, **characterized in that** parts of the compressed air hoses (6, 7) leading from the suction nozzles (3, 4) to the vacuum source (12), respectively, are connected, preferably by a tee (8), while one common compressed air hose (9, 11) leads from their connection to the vacuum source (12), which preferably contains an additional air filter (10).

## Patentansprüche

1. Gerät zur Reduzierung von beim Bremsen eines mit Trommelbremsen ausgestattetem Fahrzeug entstehenden Staubemissionen, und insbesondere eines Kraftfahrzeugs aufweisend:
eine Bremsbacke (1, 2) mit einer an der Bremsbackenbasis (3c) befestigten Reibstoffschicht (3a), bestimmt zur Montage an der festen Bremsscheibe der Trommelbremse von der Innenseite der Trommel (5) dieser Bremse und
mindestens eine Saugdüse (3, 4), bestimmt für über einen Druckluftschlauch (6, 7, 9, 11) mit einer Vakuumquelle (12) verbunden,
**gekennzeichnet dadurch, dass**
die Saugöffnung der Saugdüse (3) liegt am Rand der Reibstoffschicht (3a) des Reibbelags (1) der Bremsbacke, die im Einsatz der Drehtrommel (5) der Trommelbremse (2) abgenutzt wird, wobei
die Saugöffnung der Saugdüse (3) einen Rand (3b) hat, der aus flexiblem, gegen hohe Temperaturen beständigem Werkstoff besteht, vorteilhaft aus gegen hohe Temperaturen beständigem Kunststoff, und am vorteilhaftesten aus Hochtemperatur-Silikon.

2. Gerät nach einem der vorhergehenden Ansprüche, **gekennzeichnet dadurch, dass** die Saugöffnung der Saugdüse (3) durch eine Öffnung in der Bremsbackenbasis (3c) mit einer Schnelllösekupplung (3d) verbunden ist, die zur Verbindung der Saugdüse (3) mit dem Druckluftschlauch (6, 7, 9, 11) bestimmt ist.

3. Gerät nach einem der vorhergehenden Ansprüche, **gekennzeichnet dadurch, dass** die Bremsbackenbasis (3c) aus Metall, und vorzugsweise Stahl besteht.

4. Gerät nach Anspruch 1, **gekennzeichnet dadurch, dass** der Rand (3b) dieselbe Höhe hat, wie die Reibstoffschicht (3a), so dass der Rand (3b) eng an die Betriebsfläche der Trommel (5) Bremsen anliegt.

5. Fahrzeugbremssystem ausgestattet mit einer Trommelbremse, und insbesondere ein Kraftfahrzeug, **gekennzeichnet dadurch, dass** es ein Gerät nach einem der vorhergehenden Ansprüche aufweist.

6. System nach Anspruch 5, **gekennzeichnet dadurch, dass** es außerdem Druckluftschläuche (6, 7, 9, 11) aufweist, die zur Verbindung mit der Saugdüse (3), und insbesondere mittels einerSchnelllösekupplung (3d) mit der Vakuumquelle (12) dienen, vorteilhaft mit dem Fahrzeugkrümmer.

7. System nach eine der Ansprüche 5 oder 6, **gekennzeichnet dadurch, dass** ein zusätzlicher Luftfilter (10) in einer Kette von Druckluftschläuchen (6, 7, 9, 11) zwischen der Saugdüse (3) und der Vakuumquelle (12) angeordnet ist.

8. System nach eine der Ansprüche 5 oder 6 oder 7, **gekennzeichnet dadurch, dass** ein direkt mit der Saugdüse (3) verbundenes Teil des Druckluftschlauchs (6) aus Metall besteht.

9. System nach eine der Ansprüche 5 oder 6 oder 7 oder 8, **gekennzeichnet dadurch, dass** ein direkt mit der Vakuumquelle verbundenes Teil des Druckluftschlauchs (11) elastisch ist, und vorteilhaft aus Kunststoff hergestellt ist.

10. System nach einem der vorigen Ansprüche 5 bis 9, **gekennzeichnet dadurch, dass** es zwei in zwei Bremsbacken (1, 2) der Fahrzeugtrommelbremse angeordnete Saugdüsen (3, 4) aufweist, die an gegenüberliegenden Seiten der Trommelbremse (5), vorteilhaft symmetrisch gegenüber der Trommel (5) positioniert sind.

11. System nach Anspruch 10, **gekennzeichnet dadurch, dass** Teile von Druckluftschläuchen (6, 7), die von den Saugdüsen (3, 4) zur Vakuumquelle (12) führen, beziehungsweise, verbunden sind, vorzugsweise mit einem T-Stück (8), während ein Hauptdruckluftschlauch (9, 11) von dessen Verbindung zur Vakuumquelle (12) führt, die vorzugsweise einen zusätzlichen Luftfilter (10) aufweist.

## Revendications

1. Un appareil pour réduire les émissions de poussières générées lors du freinage d'un véhicule équipé du frein à tambour, en particulier véhicule automobile, comprenant :
la mâchoire de frein (1, 2) ayant la couche de matériau de friction (3a) montée sur la base de mâchoire (3c), destinée à être montée sur le disque fixe du frein à tambour du côté intérieur de ce tambour de frein (5) et
au moins une buse d'aspiration (3, 4) destinée à être reliée par l'intermédiaire du tuyau d'air comprimé (6, 7, 9, 11) à une source de vide (12),
**caractérisé en ce que**
l'ouverture d'aspiration de la buse d'aspiration (3) est située au bord de la couche de matériau de friction (3a) de la doublure de friction de la mâchoire de frein (1) qui est usée par le tambour rotatif (5) du frein à tambour (2) lors de l'utilisation, dans lequel
l'ouverture d'aspiration de la buse d'aspiration (3) a un bord (3b), fait d'un matériau flexible résistant à haute température, de préférence d'une matière plastique, résistant à haute température, plus préférablement, d'un silicone haute température.

2. L'appareil selon l'une quelconque des revendications précédentes, **caractérisé en ce que** l'ouverture d'aspiration de la buse d'aspiration (3) se raccorde à travers l'ouverture dans la base de mâchoire (3c) à l'accouplement à déconnexion rapide (3d) destiné pour le raccordement de la buse d'aspiration (3) au tuyau d'air comprimé (6, 7, 9, 11).

3. L'appareil selon l'une quelconque des revendications précédentes, **caractérisé en ce que** la base de mâchoire (3c) est réalisée en métal, de préférence en acier.

4. L'appareil selon la revendication 1, **caractérisé en ce que** le bord (3b) est de la même hauteur que la couche de matériau de friction (3a) de telle sorte que le bord (3b) ajuste étroitement à la surface de travail du tambour (5) pendant le freinage.

5. Un système de freinage de véhicule équipé d'un frein à tambour, en particulier un véhicule automobile, **caractérisé en ce qu'**il comprend un appareil selon l'une quelconque des revendications précédentes.

6. Le système selon la revendication 5, **caractérisé en ce qu'**il comprend en outre des tuyaux d'air comprimé (6, 7, 9, 11) pour raccorder la buse d'aspiration (3), en particulier par un accouplement à déconnexion rapide (3d) à une source de vide (12), de préférence au collecteur de véhicule.

7. Le système selon la revendication 5 ou 6, **caractérisé en ce qu'**un filtre à air supplémentaire (10) est situé dans une chaîne de tuyaux d'air comprimé (6, 7, 9, 11) entre la buse d'aspiration (3) et la source de vide (12).

8. Le système selon la revendication 5 ou 6, ou 7, **caractérisé en ce qu'**une partie du tuyau d'air comprimé (6) directement reliée à la buse d'aspiration (3) est en métal.

9. Le système selon la revendication 5 ou 6, ou 7, ou 8, **caractérisé en ce qu'**une partie du tuyau d'air comprimé (11) directement reliée à la source de vide (12) est flexible, de préférence en plastique.

10. Le système selon l'une quelconque des revendications précédentes de 5 à 9, **caractérisé en ce qu'**il comprend deux buses d'aspiration (3, 4) installées dans deux mâchoires (1, 2) du frein à tambour de véhicule, positionnées sur les côtés opposés du tambour de frein (5), de préférence symétriquement par rapport au tambour (5).

11. Le système selon la revendication 10, **caractérisé en ce que** les parties des tuyaux d'air comprimé (6, 7) conduisant à partir des buses d'aspiration (3, 4) à la source de vide (12), respectivement, sont reliées, de préférence par un té (8), tandis qu'un tuyau d'air comprimé commun (9, 11) conduit à partir de leur raccordement à la source de vide (12) qui contient de préférence un filtre à air supplémentaire (10).
